# EUROPEAN PATENT APPLICATION

(11) **EP 0 547 597 A1**
(43) Date of publication of application: **23.06.1993**
(21) Application number: 92121481.3
(22) Date of filing: 17.12.1992
(51) Int. Cl.: G02B 6/34, G02B 6/28

(54) **Optical fiber type filter and method for producing same**

(30) Priority: 18.12.1991 JP 334662/91
(71) Applicant: Shin-Etsu Chemical Co., Ltd., Chiyoda-ku Tokyo 100 (JP)
(72) Inventor: Koya, Kazuo, Fine Functional Materials Lab., Annaka-shi, Gunma 379-01 (JP); Mori, Tsuneo, Fine Functional Materials Lab., Annaka-shi, Gunma 379-01 (JP); Fujimaki, Yukio, Fine Functional Materials Lab., Annaka-shi, Gunma 379-01 (JP)
(74) Representative: Pellmann, Hans-Bernd, Dipl.-Ing.

(57) **Abstract**

The optical fiber type filter 1 of the present invention comprises a single optical fiber 2 which forms a loop and an optical coupling part 3 which is formed by fusion-bonding and drawing parts of the incident side 2a of the optical fiber 2 and the outgoing side 2b of the fiber. The optical fiber type filter 1 is produced by bending a single optical fiber 2 into a loop, arranging a part of an incident side 2a of the optical fiber parallel to a part of an outgoing side 2b of the optical fiber while coming the former in close contact with the latter and fusion-bonding and drawing the contact portion with heating to form an optical coupling part 3.

## Description

The present invention relates to an optical fiber type filter which can transmit lights falling within a narrow wavelength band width and a method for producing the filter.

Among the light communication systems, the wavelength-multiplex communication systems have intensively been investigated for practical application thereof since the systems make it possible to simultaneously propagate a plurality of signal lights having different wavelengths through a single optical fiber and to accordingly increase the transmission capacity of the systems.

In order to put the systems into practical use, it is required for the development of a high quality light-branching filter for branching signal lights having different wavelengths into individual lights and an optical filter. There have been used, as optical filters, combinations of optical fibers with prism- or diffraction grating-type optical parts. However, the assembling and adjustment of these prism- or diffraction grating-type optical parts are very difficult and they are not suitable for mass production. Moreover, the optical parts of this type do not always provide a sufficient accuracy when signal lights are branched into individual lights on the basis of the difference of wavelengths thereof.

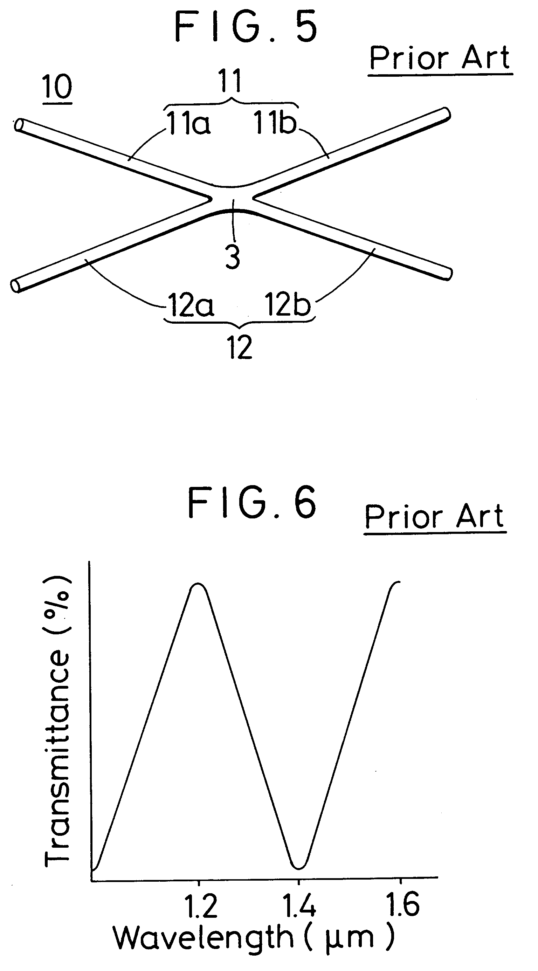

Recently, there has been developed an optical fiber type filter as shown in Fig. 5. This optical fiber type filter 10 is provided with an optical coupling part 3 formed by fusion-bonding a plurality of optical fibers (2 fibers 11 and 12, in the embodiment shown in Fig. 5) and drawing the fibers at the fusion-bonded portion. The optical fiber type filter 10 makes use of the principle of the light branching-coupling device. Therefore, a plurality of lights having different wavelengths incident upon the incident side 11a of the optical fiber 11 are branched into individual lights of on the basis of the wavelengths thereof when they pass through the optical coupling part 3. More specifically, one of the lights having a specific wavelength passes through the optical fiber 11 and is outputted from the outgoing side 11b of the fiber 11 while the other light passes through the optical fiber 12 and is outputted from the outgoing side 12b of the fiber 12. The wavelength of the light outputted through the outgoing side 11b of the fiber 11 and that of the light outputted through the outgoing side 12b of the fiber 12 are determined depending on the properties of the optical fibers 11 and 12 and the coupling properties of the optical coupling part 3 of the fibers 11 and 12.

An object of the present invention is to improve the foregoing conventional optical fiber type filter and more specifically to provide an optical fiber type filter whose wavelength band width is narrow and accordingly has an excellent degree of separation in the branching of a mixed lights of different wavelengths into individual lights on the basis of the difference in wavelength and has a low insertion loss.

According to the present invention, the foregoing object can be achieved by providing an optical fiber type filter comprising a single optical fiber which forms a loop and an optical coupling part which is formed by fusion-bonding and drawing a part of the incident side of the optical fiber and a part of the outgoing side thereof.

Another object of the present invention is to provide a method for producing an improved optical fiber type filter which easily permits the mass production of the filter.

According to the present invention, this object can effectively be accomplished by providing a method for producing an optical fiber type filter which comprises the steps of forming a single optical fiber into a loop, arranging a part of an incident side of the optical fiber parallel to a part of an outgoing side of the optical fiber while coming the former in close contact with the latter and fusion-bonding and drawing the contact portion with heating to form an optical coupling part.

According to the optical fiber type filter of the present invention, an incident light is branched upon passing through the optical coupling part, again passes through the loop and comes back to the optical coupling part to thus be again branched. Since the incident light passes through the optical coupling part twice, the filter of the present invention achieves a degree of separation of light, which is branched on the basis of the difference in wavelength, greater than that achieved by the conventional filters, exhibits a low insertion loss and has a narrow wavelength band width.
Fig. 1 is an exterior view showing an embodiment of the optical fiber type filter according to the present invention;
Fig. 2 is an exterior view showing an embodiment of the optical fiber type filter according to the present invention in the course of production thereof;
Fig. 3 is an exterior view of the optical fiber type filter according to the present invention observed when examining the wavelength characteristics of lights which transmit through the optical fiber type filter;
Fig. 4 is a diagram showing the wavelength characteristics of lights which transmit through the optical fiber type filter of the present invention;
Fig. 5 is an exterior view of a conventional optical fiber type filter; and
Fig. 6 is a diagram showing the wavelength characteristics of lights which transmit through the conventional optical fiber type filter shown in Fig. 5.

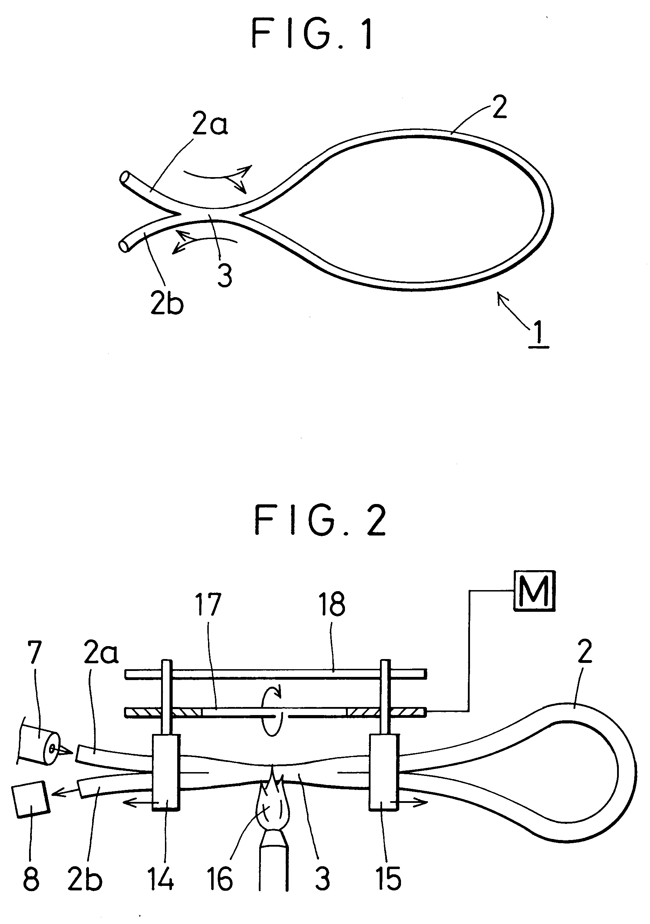

As seen from Fig. 1, the optical fiber type filter 1 of the present invention comprises a single optical fiber 2 which forms a loop and in which the incident side 2a of the optical fiber is fusion-bonded to the outgoing side 2b thereof and the fusion-bonded portion is drawn to give an optical coupling part 3.

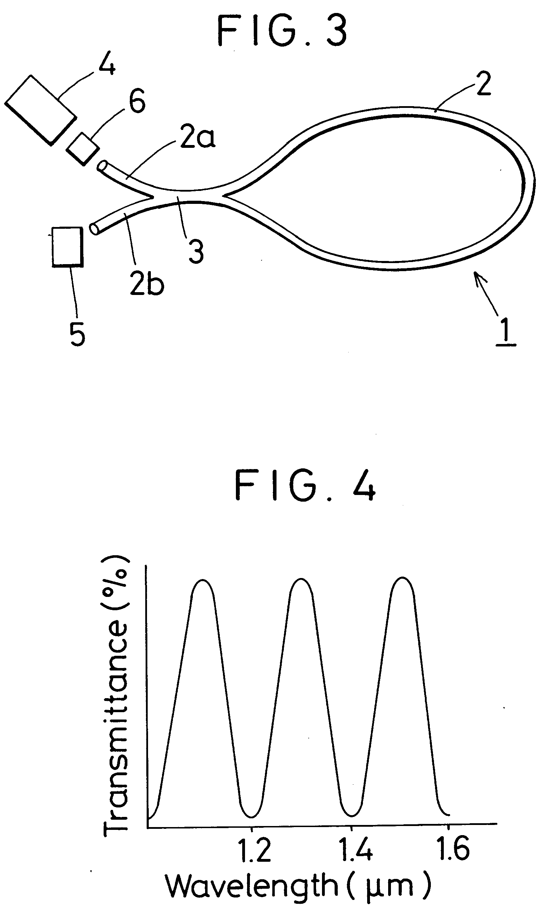

As is shown in Fig. 3, the optical fiber type filter 1 according to the present invention is preferably equipped with an optical isolator 6 at the end of incidence. Moreover, the optical fiber is preferably a single mode fiber made of a quartz glass.

As is shown in Fig. 2, the method for producing the optical fiber type filter according to the present invention comprises the steps of forming a single optical fiber 2 into a loop, arranging a part of an incident side 2a of the optical fiber parallel to a part of an outgoing side 2b of the optical fiber while coming the former in close contact with the latter and fusion-bonding and drawing the contact portion with heating to form an optical coupling part 3.

In the method for producing the optical fiber type filter, the optical coupling part 3 is formed by controlling the degree of fusion-bonding and drawing while making a monitor light incident upon the incident side 2a of the optical fiber and detecting the light outputted from the outgoing side 2b of the optical fiber to confirm the degree of coupling of the optical coupling part 3. In addition, a means for heating used for forming the optical coupling part 3 is preferably an oxyhydrogen flame.

The optical fiber type filter 1 makes use of the principle of the light branching-coupling device. If a plurality of lights having different wavelengths are superposed in a light branching-coupling device, the intensity of each light transmitting therethrough is proportional to the wavelength of the corresponding light. It has been known, in theory, that if lights having different wavelengths are superposed, the lights are separated into individual lights due to the difference between the wavelengths thereof. It is necessary to draw the optical coupling part as fine and long as possible in order to increase the extent of the superposition of transmitted lights. In this respect, however, it should be noted that the finer the optical coupling part, the greater the insertion loss thereof.

In the optical fiber type filter 1 according to the present invention, a plurality of lights having different wavelengths incident upon the incident side 2a of the optical fiber are separated upon passing through the optical coupling part 3 and part of the lights having certain wavelengths clockwise propagate through the loop of the optical fiber 2 and come back to the optical coupling part 3 wherein the lights are again branched. The other part of the lights which are first separated in the optical coupling part 3 counterclockwise propagate the loop of the optical fiber 2, come back to the optical coupling part 3 and are likewise branched once more. The lights thus secondarily branched in the optical coupling part 3 are partially outputted through the outgoing end 2b of the optical fiber depending on the wavelengths thereof, while the remaining lights are partially outputted through the incident side 2a of the optical fiber. If the remaining lights which return to the incident side and are outputted from the incident end 2a of the optical fiber possibly causes disturbances, the optical isolator 6 should be positioned at the end of incidence to screen only the remaining lights outputted from the incident end 2a of the fiber without affecting lights incident upon the side 2a of the fiber, as shown in Fig. 3.

Preferred embodiments of the present invention will hereinafter be explained in more detail with reference to the accompanying drawings, but the present invention is by no means limited to these specific embodiments.

Fig. 1 is an exterior view of the optical fiber type filter of the present invention comprising a single optical fiber 2 which forms a loop and in which the incident side 2a of the optical fiber is fusion-bonded to the outgoing side 2b thereof and the fusion-bonded portion is drawn to give an optical coupling part 3. The optical fiber 2 is a single mode fiber of a quartz glass.

Fig. 2 is an exterior view showing the optical fiber type filter according to the present invention in the course of production thereof and an optical fiber 2 as a material for the filter is fitted to an apparatus for fusion-bonding and drawing the same. The apparatus for fusion-bonding and drawing the fiber comprises clamps 14 and 15 for holding two portions of the optical fiber 2 and drawing in the opposite directions and a burner capable of providing an oxyhydrogen flame 16 for heating the optical fiber. The clamps 14 and 15 are connected to a drawing mechanism which comprises a threaded bar 17, a guiding bar 18 and a driving motor M. The threaded bar 17 is a round bar whose both sides are threaded and is supported on a shaft of a chassis (not shown) of the apparatus. The threaded bar 17 is connected to the driving motor M through a transmission system. The right-hand thread portion of the threaded bar 17 is screwed in the clamp 14, while the left-hand thread portion of the threaded bar 17 is screwed in the clamp 15. The guiding bar 18 supported by the chassis of the apparatus is fitted in these clamps 14 and 15 in a freely sliding manner. Further, the apparatus is provided with a light source 7 emitting a laser beam of a predetermined wavelength and a light-intensity detector 8.

A single mode fiber 2 of a quartz glass as a material for the filter is fitted to the apparatus for fusion-bonding and drawing. A loop is formed by bending the optical fiber 2, a part of an incident side 2a of the optical fiber 2 is arranged parallel to a part of an outgoing side 2b of the optical fiber 2 while coming the former in close contact with the latter and both ends of the contact portion are fitted to the clamps 14 and 15. The incident side 2a of the fiber is connected to the light source 7 and the outgoing side 2b thereof is connected to the light-intensity detector 8. The central region of the contact portion or the portion fitted to the clamps 14 and 15 is heated by the oxyhydrogen flame 16 to a half-molten state, then the driving motor M is operated to externally shift the clamps 14 and 15 towards the opposite directions and accordingly, the portion of the incident and outgoing sides 2a and 2b of the optical fiber which are arranged in parallel and come in close contact with one another is drawn and fusion-bonded to give an optical coupling part 3. At this stage, the drawing operation is carried out while emitting the laser beam and detecting the intensity of the light outgoing through the outgoing side 2b of the fiber by the light-intensity detector 8. As the fusion-bonding and drawing process proceeds, the light intensity detected by the detector 8 gradually varies. The fusion-bonding and drawing operationis stopped at an instance when the light intensity detected by the detector 8 reaches a predetermined level by interrupting the driving motor M and the oxyhydrogen flame 16.

The optical fiber type filter of the invention was produced according to the foregoing method and experiments were performed to determine the wavelength characteristics of lights transmitting through the filter.

More specifically, there was provided a single mode fiber 2 made of a quartz glass having a diameter of 125 µ m and a part of the optical fiber 2 was bent into a loop. The radius of the loop was adjusted to not less than 15 mm so that any increase in the optical loss due to the bending was not observed. The optical fiber 2 was fusion-bonded and drawn according to the foregoing method to form an optical coupling part 3 having a length (fusion-bonded part) of 23 mm and the minimum diameter of 23 µ m.

An optical isolator 6 was connected to the end of incidence on the incident side 2a of the thus produced optical fiber type filter 1 according to the present invention as shown in Fig. 3. Moreover, a light-emitting device 4 equipped with a spectrometer is connected to the end of incidence through the optical isolator 6 while a spectrophotometric analyzer 5 was connected to the outgoing side 2b of the optical fiber to determine the wavelength characteristics of lights transmitting through the filter 1.The results thus obtained are shown in Fig. 4.

By way of comparison, a conventional optical fiber type filter 10 as shown in Fig. 5 was separately produced and the same wavelength characteristics-measurement was performed. This optical fiber type filter 10 was produced by arranging, in parallel, parts of two single mode fibers 11 and 12 each having a diameter of 125 µ m while coming in close contact with one another and fusion-bonding and drawing the close contact portion thereof using the same apparatus for fusion-bonding and drawing shown in Fig. 2 used above to form an optical coupling part 3 having a length (fusion-bonded part) of 24 mm and the minimum diameter of 21 µ m.

A light-emitting device 4 equipped with a spectrometer is connected to the end of incidence 11a of one optical fiber 11 of the optical fiber type filter 10, while a spectrophotometric analyzer 5 was connected to the outgoing side 12b of the other optical fiber 12 to determine the wavelength characteristics of lights transmitting through the filter 10. The results thus obtained are shown in Fig. 6. Incidentally, in the conventional optical fiber type filter 10, there would not be theoretically observed any component of incident light which comes back to the incident side 11a of the optical fiber 11, except for ghost components such as those due to Fresnel reflection and, therefore, any optical isolator was not incorporated into the system.

As seen from the comparison between the results shown in Figs. 4 and 6, the accuracy of wavelength separation achieved by the conventional optical fiber type filter 10 is about 1/2 time that achieved by the optical fiber type filter 1 of the present invention. In other words, the wavelength band width of light transmitting through the filter 1 of the present invention is about 1/2 time that observed for the conventional filter 10.

The optical fiber type filter 1 of the present invention comprises a single optical fiber 2 which forms a loop and an optical coupling part 3 which is formed by fusion-bonding and drawing parts of the incident side 2a of the optical fiber 2 and the outgoing side 2b of the fiber. The optical fiber type filter 1 is produced by bending a single optical fiber 2 into a loop, arranging a part of an incident side 2a of the optical fiber parallel to a part of an outgoing side 2b of the optical fiber while coming the former in close contact with the latter and fusion-bonding and drawing the contact portion with heating to form an optical coupling part 3.

## Claims

1. An optical fiber type filter comprising a single optical fiber which forms a loop and an optical coupling part which is formed by fusion-bonding and drawing a part of an incident side and a part of an outgoing side of the optical fiber.

2. The optical fiber type filter according to claim 1 wherein it further comprises an optical isolator at the end of incidence of the optical fiber.

3. The optical fiber type filter according to claim 1 wherein the optical fiber is a single mode fiber of a quartz glass.

4. A method for producing an optical fiber type filter comprising the steps of bending a single optical fiber into a loop, arranging a part of an incident side of the optical fiber parallel to a part of an outgoing side of the optical fiber while coming the former in close contact with the latter and fusion-bonding and drawing the contact portion with heating to form an optical coupling part.

5. The method for producing an optical fiber type filter according to claim 4 wherein the optical coupling part is formed while controlling the degree of fusion-bonding and drawing through making a monitor light incident upon the end of incidence of the optical fiber and detecting a light outputted from the outgoing end of the optical fiber to confirm the degree of coupling of the optical coupling part.

6. The method for producing an optical fiber type filter according to claim 4 wherein a means for heating used for forming the optical coupling part is an oxyhydrogen flame.

7. The method for producing an optical fiber type filter according to claim 4 wherein the optical fiber is a single mode fiber of a quartz glass.
